# EUROPEAN PATENT APPLICATION

(11) **EP 2 538 629 A1**
(43) Date of publication of application: **26.12.2012**
(21) Application number: 11382213.4
(22) Date of filing: 22.06.2011
(51) Int. Cl.: H04L 29/06

(54) **Content delivering method**

(71) Applicant: Alcatel Lucent, 75007 Paris (FR)
(72) Inventor: Villegas, Alvaro, 28033 Madrid (ES); Chow, Keith, Maidenhead (Berkshire), SL6 6FL (GB); Pérez García, Pablo, 28050 Madrid (ES); Van Boven, Christian, 28029 Madrid (ES)
(74) Representative: Elzaburu Marquez, Alberto

(57) **Abstract**

A content delivering method that improves user experience expectation by adapting the first streaming content segments to a client endpoint device (13) in response to a message requesting the desired multimedia content. Using a HTTP type message request makes it possible to reduce the time required to being playback of the desired multimedia content in the requesting client endpoint device (13).

## Description

The instant invention refers in general to the broadcast of digital multimedia content on a distributed network.

### STATE OF THE ART

The broadcasting of digital multimedia from an original content server towards individual client endpoint devices over a broadcasting network that includes a content delivery network CDN is known in the state of the art.

Part of the broadcasting network can be a type of cable access network or wireless network where the available bandwidth is a critical feature and variable in time, so using a communications protocol of the HTTP adaptive bit rate streaming protocol type of adaptation rate bits transmitted to adapt the streaming of video content to the available bandwidth.

Controlling the transmission, the contents are available to clients in chunks or segments, each of which is available at various bit rates in order that a client may request successive segments of content encoded a different bit rates as changing network conditions.

Available versions and methods to access to the content segments are listed in a manifest file is also available to clients.

The content segments are distributed transparently through cache hierarchies present in content distribution networks CDN.

An individual client endpoint devices type mobile phone, laptop computer and other consumer electronic devices need to receive several content segments to complete to begin decoding the data with the aim of showing a video and audio content on a screen requested audiovisual individual client end device without causing a buffer emptying as a result of variations in the speed available on the Web.

As a result, the time elapsed since the playing order back to the first presentation of audio and video frames can be very high, up to tens of seconds.

In an environment of video on demand VOD this produces a less than satisfactory user experience at the start of reproduction, and in an environment of live channels produces a channel change time is unacceptable.

To accelerate the initial presentation of the video the client can always use the lowest bit rate available for the first content segment, so your download faster. However, this procedure is limited by the available bit rate for content.

Additionally, use lower speeds for starting the video negatively affects its quality and therefore the end-user experience, perceived low quality in the first moments of the new content or every channel change in live.

### DESCRIPTION

The instant invention seeks to resolve or reduce one or more of the problems outlined above by a content distribution method as defined in the claims.

The content delivering method makes it possible to improve user experience expectation by adapting the first streaming content segments to a client endpoint device in response to a message requesting the desired multimedia content. Using an HTTP type message request makes it possible to reduce the time required to begin playback of the desired multimedia content on the requesting client endpoint device.

The method comprises the one hand the division by means of a editing network device at least a received content segment into a plurality of segment portions equal or greater number of content segments required by the client endpoint device to begin playback of the multimedia content requested by means of a request message, and insert into a manifest file modify or edit an uniform resource identifier URI associated with each segment portion generated to allow the end device client requesting the stream of portions of segment generated.

Yet another object of the method is allowed the encoding of each portion of segment to different bit rates, using an HTTP protocol Adaptive streaming bit rate, being each portion of segment to different bit rates associated with a uniform resource identifier URI, to allow the client adapt to available bandwidth in each moment, in the transmission network.

As a result the network operator has the ability to edit the manifest file in an edge network device so as to have some control of the time required to start playback of multimedia content broadcasted through a broadcast network to the requesting client end device.

The method is transparent for both the client and for the original multimedia content server and does not require installing any additional hardware or software in the content provider or in the client endpoint device other than what is necessary to install an HTTP adaptive bit rate streaming protocol.

The method comprises the other hand the generation of the network device editor of additional versions of the portions or subdivisions of the segments of content to lower bitrates for dynamic removal of video frames that are not reference other frames, which remain in the segment content.

### BRIEF LISTING OF THE FIGURES

A more detailed explanation of a device and/or method in accordance with the description of embodiment disclosed in the following description based on the attached figures, in which:

Figure 1 schematically shows a communication protocol for transmission of a multimedia content video and audio through an HTTP protocol adaptive streaming bit rate, through the segmentation of multimedia content and encoding to different bit rates,

Figure 2 schematically shows a distribution network of multimedia content that includes a network server editor at the end of the same,

Figure 3 schematically shows a plurality of segments of multimedia content segment in portion of segment,

Figure 4 schematically shows the technique of removing video frames into segments including content segment related to multimedia content in order to reduce the size of the segments and, therefore, its transmission time, and

Figure 5 schematically shows the distribution of multimedia content that includes an additional multimedia content origin server at the end of the same network.

### DESCRIPTION OF EMBODIMENTS

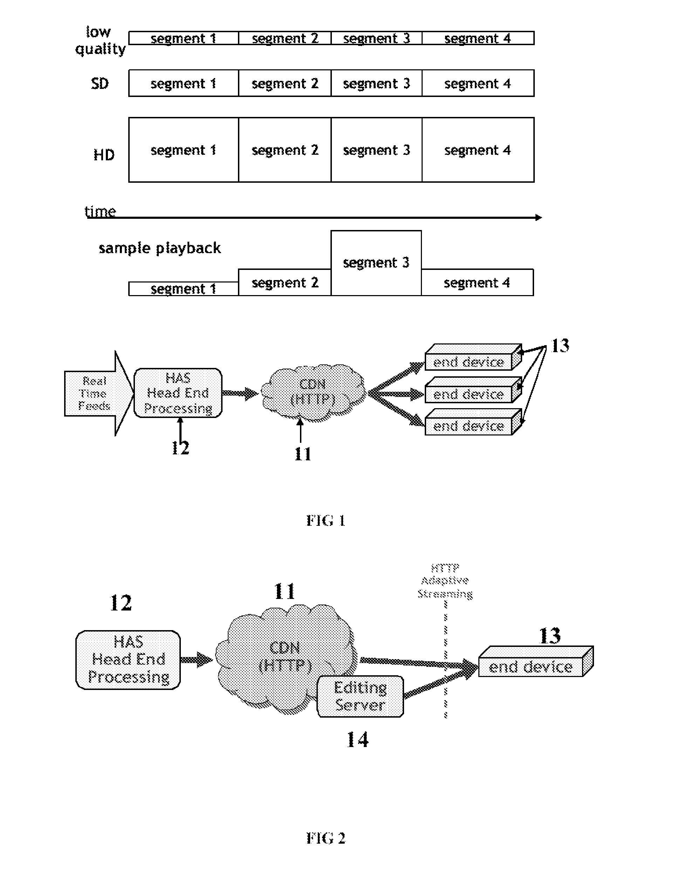

Referring to figure 2 a telecommunications network includes a streaming network transmission and access network to interconnect geographically distributed a plurality of individual client endpoint devices to a multimedia content origin server.

The connection between the access network and the individual clients endpoint device 13 may be made through a wireless network or a fiber communication network or a combination of the two.

The access network includes a content delivery network 11 CDN comprising a plurality of cache storage devices geographically distributed through the access network, which acts as data caches.

Said data caches store data frequently requested by the network users, for example, web pages and associated images can be stored in cache so that the requests for repetition of the same web content is available from the cache without generating additional traffic throughout the network and, specifically, in the streaming network such as an Internet network. Furthermore, the data requested from web sites or Internet providers by the client devices can be stored in cache in an edge network device.

The content origin server 12 broadcasts contents that may be accessed by the clients. Multimedia contents are identified by a title, that is, an audio and video data entity that can be identified by a title, Uniform Resource Identifier URI, that is, an entity of video and audio data that can be identified by a title. The size of multimedia content depends on the overall length of the content segments, encoding technique, resolution of the content, data format, etc.

Referring now to Figure 1, when using a communications protocol of the HTTP protocol type to bit rate adaptive streaming HTTP protocol each segment into which the original contents given bit rate unit is accessible by clients through the application of the corresponding independent URI.

The origin server 12 encodes each content segment at a different bit rate to allow the client endpoint device 13 to request content segments adapted to prevailing network conditions in each moment, that is, on the basis of available bandwidth.

Different versions of bit rates of content segments are stored with different names on a manifest file.

When a particular content segment is available in different bit rates, the manifest file includes URIs for each of the different versions of the segment.

The manifest file that can contain a list of titles or a template to build, or a combination of both.

The origin server 12 generates the manifest file or files and assigns a unique URI, which is broadcast by the network through the CDN identically to other content.

The multimedia content desired playback with a bit rate adaptive streaming HTTP protocol is triggered when it received the request message requesting a manifest file, whose address is usually embedded in the main web page of the application.

In response to the request received from a client end device 13, the origin server 12 sends a manifest file to the client end device 13. The client selects a version of the segment content portion and sends a HTTP request to the originating server 12 and/or a storage device cache.

The consecutive content segments transmitted to the client, with a stream that is at least partially dependent on the version of the content item. The procedure to request content segments may continue at a steady bit rate or constant if the network conditions make it possible.

Consequently, the client can choose between different versions of the same content segment based on the operating parameters of the network. The client decides whether or not to apply for a different version of a content segment consecutive to the received content segment. Thus, each client makes its own decision as to which version of the content segment requests and the decision can be changed to suit changes in operating parameters of the network.

When a client wish a particular multimedia content including video and audio broadcasts a request message for a particular multimedia content via a client end device 13 using a communication protocol of HTTP, for example.

A cache storage device receives the request and, in a scenario where the requested multimedia content is stored in the cache storage device, each segment of the desired content is delivered to the requesting end device 13 in response to received HTTP request message.

In response to the request received, the client end device 13 downloads from a CDN cache a manifest file, including the list of URIs available at the beginning of reproduction, which is the first download session.

Returning to figure 2, a editor network device 14 is connected in parallel with the last level cache of the CDN, at a point close to the client end devices 13.

The editor network device 14 has access to all segments and manifests available in the caches and is adapted to download directly to both the segments and the manifest files.

When the end device 13 requesting start playback of content on demand or live with a minimum delay, the request message, including the URI of the original manifest file released by the origin server 12 is transmitted and/or redirected through an application to the editor device 14 so that the end device 13 downloads the manifest file previously modified by the editor device 14.

The URI of the manifest file in the editor network device 14 may be different to the URI of the original manifest file released from the origin server 12.

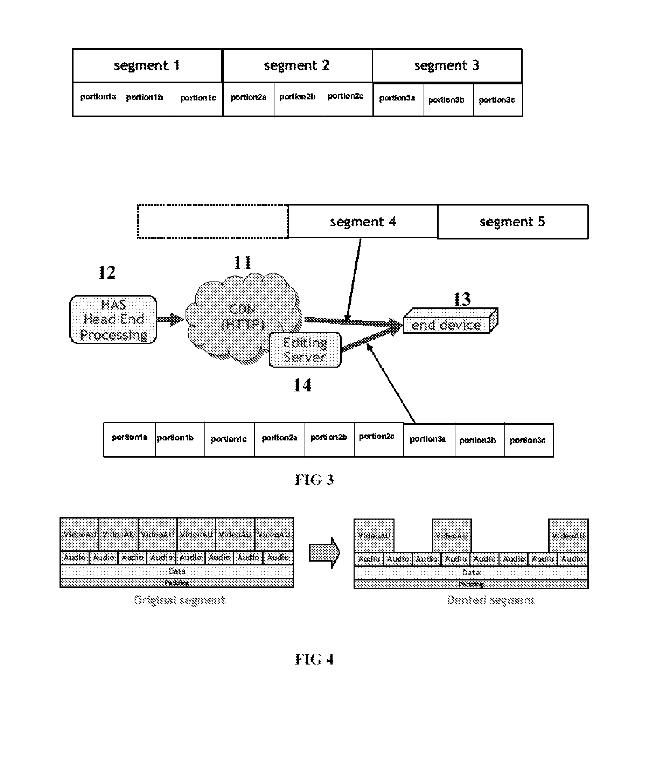

Referring to figure 3, the editor device 14 following the receipt of the request message transmitted by the end device 13, the editor 14device downloads the file original manifest from a CDN to modify the content of the same as follows: the URI of the first segment of content listed in the manifest file is deleted and are inserted a number of URIs corresponding to fragments or portions of original content segment. The above can be repeated for URIs of consecutive content segments to the first segment of content.

That is, the editor network device 14 provides the end device 13 an edited manifest file including a list of URIs of segment content portions, so that edited the manifest file includes URIs which are not included in original manifest file.

At the same time, the editor device 14 downloads the first segment of the original content from the CDN and divided into a plurality of segment portions equals the number of content segments that need the requested end device 13 to start showing it in an audiovisual display of the requesting client end device 13.

Therefore, the editor device 14 eliminates the uniform resource identifier URI such as the Uniform Resource Locator URL associated with the divided content segment and inserts the URIs associated with portions of segment generated by the editor device 14.

Thus, when the end device 13 analyzes the modified manifest file and decides the first segments of the list will be request, the end device 13 uses URIs or URL of the segments portions generated by the editor device 14 and, accordingly, the petition shall be addressed to the same editor device 14 that made the division of segments into portions.

In response to the request segment portions received in the editor device 14, the segment portions are sent directly from a cache of the device editor 14.

It is also possible that there is an additional hierarchy of caches connected to an output editor device 14, so that the end device 13 to download the modified manifest files and segment portions from the plurality of caches.

The edited manifest file specifies the template of uniform resource identifier URI or Uniform Resource Locators URL for the segment portions at different bit rates and consecutive content segments to different bit rates that form the requested multimedia content or desired. The edited manifest file can be viewed as a playlist file. In general, the manifest file is a file containing URIs to identify how and where to find portions of the content segment and segments for the desired content.

The number of portions of segment which is divided each segment of content and number of content segments that are divided by the editor device 14 is based on the type of client end device 13 transmits the request message. Consequently, each request message may include information relating to the type of end device 13 requesting to allow the editor device 14 to divide each content segment in a determined number of portions and how many content segments have to be divided.

The manifest file also includes additional information over content segments, portions of segments and the different versions of the same, such as bit rate content segments and portions of the segment, the codec used to code versions, video resolutions, markers, and title.

The partition of the content segment allows the downloading of same segment portions and the consequent rapid start of playback without having to download multiple full content segments.

The modified manifest file created by the editor network device 14 is constructed so that the end device always ask portions of consecutive segments, and therefore the assembly in a row to generate the original content segment.

The editor network device 14 applies a partition procedure simple to each content segment to generate portions of content segment without analyzing the contents of the segment divided and therefore a reduced computational cost.

The modified manifest file by the editor network device 14 is constructed so that after the URIs segment portion follow URIs of the original segments without cut in portions, so that when the end device 13 finishes ask portions of the content segments request directly to the CDN segment corresponding original without causing any burden on the editor network device 14.

The editor network server 14 may perform other prosecutions to the segments or segment portions in order to reduce the download time on the end device and accelerate the process of starting or channel changing in live.

In any case these processes are performed locally on the editor server network 14 without modifications to the origin server 12, the distribution network and/or end device 13.

For example, once it has been started downloading of a multimedia content and, therefore, is playing in the client end device 13, the editor server 14 may influence in the the rate of transmission of content segments or portions of segment requested by the client end device 13, changing its size.

For example, referring to Figure 4 instead of sending all video frames or picture including in a origin or original content segment, the editor server 14 may delete some video frames of original content segment received according to the technique called denting to generate a dented segment that includes fewer video frames.

When applying the denting technique the editor server 14 selectively eliminates video frames that are non-reference pictures of other pictures that remain in the segment and therefore the elimination does not affect the decoding of the process video into the end device 13.

During the process of denting the audio is not changed, so that the subjective effect of decoding the resulting segments in the end device 13 is only a visual reduction in the number of video frames presented per second.

As a result of the denting technique the overall rate of transmission of the segment or segment portion is accelerated, since the amount of information to be transmitted is reduced significantly.

Also, the server can assign different URIs to modified segments, and modify the manifest file to inform the end device.

In another embodiment, the server can maintain the original URI of the segment and act as a cache, responding to requests on that URI with the segment changed without informing the end device 13.

The technique of denting can be applied at other times of reproduction than the initial moment. For example, the frame rate can be reduced to maintain the reproduction of multimedia content requested by the client end device 13 in response to a limitation in the network detected. Due to the reduction of stream received, the client will notice a change in some parameter of the movie, while maintaining audio quality. Thus, the editor server 14 can reduce the amount of data flowing through the network to encode at a lower frame rate the video segment content.

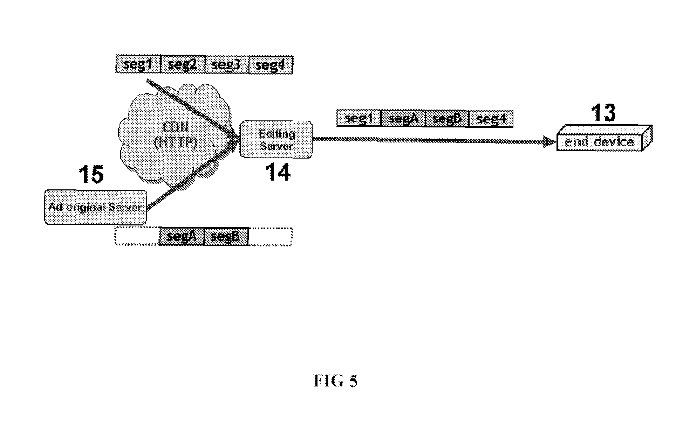

Referring now to Figure 5, a service provider can use the editor server 14 to interleave content segments transmitted from an additional originating server 15 of additional multimedia content within the stream of content segments transmitted from the content originating server 12 and/or storage device cache.

The editor server 14 inserts in the manifest file URIs for additional content segments interleaved between segments of URIs of content origin. For example, additional content segments may be associated with video advertising, for example, interleaved between content segments of a video film and/or a TV program.

It should be noted that the editor server 14 can be viewed from the client and server multimedia content distributor of video and audio. Therefore, when the delay is a crucial parameter in the reproduction of a live event, the editor server 14 may act as a distributor server to a multicast live TV, for example, a sporting event like a football match. To avoid excessive delays in the reproduction of stream transmitted from the originating server 12 and/or storage device cache, the editor server 14 amends the manifest file so that all segments of the desired content are requested by the client endpoint 13 to the editor server 14.

Furthermore, the distribution method of multimedia content can be done by a computer program having access to a computer support medium that is usable or readable by a computer that provides the program codex for use of or connected to a computer or any other system for executing instructions.

A usable or readable computer support medium may be any apparatus that can hold, store, communicate, disseminate or transport the program for use of or in connection with the system, apparatus or device that executes the instruction.

The computer support medium usable or readable by computer can be an electronic, optical, electromagnetic, infrared or semiconductor system, apparatus or device.

A readable computer medium includes a semiconductor, or solid-state memory, magnetic tape, removable computer diskette, a random access memory (RAM), a read only memory (ROM), a magnetic hard drive and an optical disk. Current examples of optical disks include a compact disk with read only memory (CD ROM), a read / write compact disk (CD R/W) and a digital video disk (DVD).

The editor device 14 is an apparatus that includes a processor, memory and a communications interface. The processor can include a multi-function processor and / or a processor for specific applications. As such, the editor device 14 can be a router, server, etc., that runs the computer readable instructions.

The computer memory may include a storage medium and a permanent large capacity storage device, such as a hard drive. The communication interface enables communication with other computers by means of, for example, the Internet Protocol (IP). The computer runs computer readable instructions stored in the storage medium for executing the distribution method of multimedia content.

## Claims

1. A method of content delivering transmitted through a streaming network; **characterized** because the method comprises:
➢ Receiving in a editor network device (14) of at least one segment of content included within the multimedia content transmitted,
➢ Cutting by the editor network device (14) of the received segment content in a number of portions of content segment to allow the client end device (13) begins playback of multimedia content in response to the receipt by the editor network device (14) a request message of the multimedia content,
➢ Receiving in the editor network device (14) of a manifest file associated to the transmitted multimedia content, to insert a uniform resource identifier URI associated to each portion of segment generated into the manifest file,
➢ Transmitting by the editor network device (14) of the edited manifest file to the client end device (13) of the requesting multimedia content, and
➢ Transmitting by the editor network device (14) of the generated portion of segment in response to the receipt by the editor network device (14) a request message of the segment portions emitted from the client end device (13).

2. Method according to the claim 1, wherein the method comprises the removing a uniform resource identifier URI associated to the content segment divided into portions of segments of content.

3. Method according to the claim 2, wherein the method comprises encoding using the editor network device (14) each portion of segment generated at different bit rates, being each segment portion of different bit rate associated with a uniform resource identifier URI.

4. Method according to the claim 3, wherein the uniform resource identifier URI is a uniform resource locator URL.

5. Method according to the claim 1, wherein the method comprises removing by the editor device by network (14) of at least a video frame included in the received content segment.

6. Method according to the claim 1, wherein the method comprises ordering video frames of the received content segment based on their influence on the playback of the multimedia content desired.

7. Method according to the claim 1, wherein the method comprises inserting in the received manifest file of at least a uniform resource identifier URI associated with a additional content segment transmitted from an originating server (15) additional multimedia content.

8. A editor network device connectable to a broadcast network over which multimedia content are distributed to a plurality of client end devices (13), wherein the editor network device (14) is adapted to receive at least a segment content included in the distributed multimedia content, being the received content segment divided in a number of portions of content segment to allow the client end device (13) begins playback of multimedia content in response to the receipt by the editor network device (14) a request message of the multimedia content; is also adapted to receive a manifest file associated to the transmitted multimedia content, to insert in the manifest file an uniform resource identifier URI associated to each generated segment portion; is adapted to transmit the edited manifest file in response to the reception at the network device editor (14) the request message of the multimedia content; and is also adapted to transmit portions of segment generated in response to the reception at the editor network device (14) a request message of segment portions emitted from the client end device (13).

9. Device according to the claim 8, wherein the editor network device (14) is adapted to remove a uniform resource identifier URI associated to the content segment divided into portions of segments of content.

10. Device according to the claim 8, wherein the editor network device (14) is adapted to encode each segment portion generated at different bit rates, being each segment portion of different bit rate associated with a uniform resource identifier URI.

11. Device according to the claim 8, wherein the editor network device (14) is adapted to remove at least one video frame included in the received content segment.

12. Device according to the claim 11, wherein the editor network device (14) is adapted to order the video frames received contended segment in terms of their influence on the desired media playback.

13. Device according to the claim 8, wherein the editor network device (14) is adapted to insert in the received manifest file at least a uniform resource identifier URI associated with an additional content segment transmitted from an originating server (15) additional multimedia content.

14. A computer program that can be loaded in an internal buffer of a computer with input and output units and a processing unit, where the computer program comprises code which, when executed by the computer, cause the computer to perform the steps of claims 1 to 7.

## Amended claims

### Amended claims in accordance with Rule 137(2) EPC.

**1.** A method of content delivering transmitted through a streaming network; **characterized in that** the method comprises:
➢ Receiving in a editor network device (14) of a multimedia content transmitted comprising at least one segment,
➢ Cutting by the editor network device (14) of the segments content received in a number of content segment portions
➢ Receiving in the editor network device (14) of a manifest file associated to the transmitted multimedia content, to insert a uniform resource identifier URI associated to each content segment portion generated into the manifest file,
➢ Transmitting by the editor network device (14) of the edited manifest file to the client end device (13) having requested the multimedia content, to allow the client end device (13) playbacks of multimedia content in response to the receipt by the editor network device (14) of a playback request message of the multimedia content from the client end device (13), and
➢ Transmitting by the editor network device (14) of the generated content segment portions in response to the receipt by the editor network device (14) a request message of the content segment portions emitted from the client end device (13).

**2.** Method according to the claim 1, wherein the method comprises the removing a uniform resource identifier URI associated to the content segment portions of multimedia content.

**3.** Method according to the claim 2, wherein the method comprises encoding using the editor network device (14) each content segment portion generated at different bit rates, being each content segment portion of different bit rate associated with a uniform resource identifier URI.

**4.** Method according to the claim 3, wherein the uniform resource identifier URI is a uniform resource locator URL.

**5.** Method according to the claim 1, wherein the method comprises removing by the editor device by network (14) of at least a video frame included in the received content segments.

**6.** Method according to the claim 1, wherein the method comprises ordering video frames of the received content segments based on their influence on the playback of the multimedia content desired.

**7.** Method according to the claim 1, wherein the method comprises inserting in the received manifest file of at least a uniform resource identifier URI associated with a additional content segment transmitted from an originating server (15) additional multimedia content.

**8.** An editor network device connectable to a broadcast network over which multimedia content are distributed to a plurality of client end devices (13), wherein the editor network device (14) is adapted to receive multimedia content transmitted comprising at least one segment, being the content segments received divided in a number of content segment portions; is also adapted to receive a manifest file associated to the transmitted multimedia content, to insert in the manifest file an uniform resource identifier URI associated to each generated segment portion; is adapted to transmit the edited manifest file to the client end device (13) having requested the multimedia content to allow the client end device (13) playbacks of multimedia content in response to the receipt by the editor network device (14) a request message of the multimedia content; and is also adapted to transmit content segment portions generated in response to the reception at the editor network device (14) a request message of content segment portions emitted from the client end device (13).

**9.** Device according to the claim 8, wherein the editor network device (14) is adapted to remove a uniform resource identifier URI associated to the content segment portions of segments of multimedia content.

**10.** Device according to the claim 8, wherein the editor network device (14) is adapted to encode each content segment portion generated at different bit rates, being each content segment portions of different bit rate associated with a uniform resource identifier URI.

**11.** Device according to the claim 8, wherein the editor network device (14) is adapted to remove at least one video frame included in the received content segments.

**12.** Device according to the claim 11, wherein the editor network device (14) is adapted to order the video frames received contended segments in terms of their influence on the desired media playback.

**13.** Device according to the claim 8, wherein the editor network device (14) is adapted to insert in the received manifest file at least a uniform resource identifier URI associated with an additional content segment transmitted from an originating server (15) additional multimedia content.

**14.** A computer program that can be loaded in an internal buffer of a computer with input and output units and a processing unit, where the computer program comprises code which, when executed by the computer, cause the computer to perform the steps of claims 1 to 7.
